# FASCICULE DE BREVET EUROPEEN

(11) **EP 2 022 049 B1**
(45) Date de publication et mention de la délivrance du brevet: **21.10.2009**
(21) Numéro de dépôt: 07731406.0
(22) Date de dépôt: 03.05.2007
(51) Int. Cl.: G11B 9/00, G11B 9/04

(54) **SUPPORT D'ENREGISTREMENT DE DONNEES PAR EFFET ELECTRIQUE COMPORTANT UNE COUCHE A CONDUCTION ELECTRIQUE LOCALISEE**
DATENAUFZEICHNUNGSMEDIEN MIT ELEKTRISCHEM EFFEKT, EINSCHLIESSLICH EINER LOKALISIERTEN ELEKTRISCHEN LEITUNGSSCHICHT
ELECTRICAL-EFFECT DATA RECORDING MEDIUMS THAT INCLUDES A LOCALIZED ELECTRICAL CONDUCTION LAYER

(30) Priorité: 18.05.2006 FR 0604458
(43) Date de publication de la demande: 11.02.2009
(73) Titulaire: Commissariat à l'Energie Atomique, 75015 Paris (FR)
(72) Inventeur: GIDON, Serge, 38140 La Murette (FR); DESIERES, Yohan, 38000 Grenoble (FR)
(74) Mandataire: Jouvray, Marie-Andrée
(86) Numéro de dépôt international: PCT/FR2007/000760
(87) Numéro de publication internationale: WO 2007/135258

(56) Documents cités:
- US-A1- 2005 285 169

## Description

### Domaine technique de l'invention

L'invention est relative à un support d'enregistrement de données par effet électrique comportant au moins une couche d'enregistrement sur laquelle est disposée une couche à conduction électrique localisée, constituée par un matériau présentant une faible conductivité électrique et dans lequel sont dispersées des inclusions présentant une conductivité électrique supérieure à celle dudit matériau.

### État de la technique

L'enregistrement de données, aussi bien dans le domaine de l'informatique que dans le domaine des multimédias, doit répondre à un besoin croissant de capacité. Différentes techniques ont été développées, allant du disque dur magnétique au support d'enregistrement utilisant l'optique (par exemple de type DVD) et aux mémoires solides. Quelle que soit la technique d'enregistrement utilisée, on cherche toujours à réduire la taille des points mémoires (bits). L'accroissement de la capacité d'enregistrement passe par une augmentation de la densité de stockage. Or, les moyens d'accès aux données enregistrées fixent souvent la densité de stockage maximale possible : par exemple la taille du spot laser en optique ou bien le circuit d'adressage lignes/colonnes pour les mémoires solides.

Récemment, de très grandes capacités de stockage, de l'ordre du Térabit/cm², ont été obtenues en mettant en oeuvre des micro-pointes du type de celles utilisées dans le domaine de la microscopie à force atomique (« The Millipede - More than one thousand tips for future AFM data storage », P. Vettiger et al., IBM J. RES. Develop., viol. 44, n° 3, mai 2000, p.323-340). La haute densité est obtenue par localisation des bits au moyen de micro-pointes dont l'apex est de dimension nanométrique. Généralement, une pluralité de micro-pointes est utilisée, en quasi-contact avec la surface du support d'enregistrement, pour modifier localement les propriétés dudit support et donc coder des informations avant de pouvoir les relire.

Les supports d'enregistrement peuvent être classés en différentes familles, selon le type de propriétés modifiées dans le support lors de l'enregistrement des données. Ainsi, l'enregistrement de données peut être réalisé par la formation de trous dans une couche en matériau polymère ou bien par passage réversible d'un état amorphe à un état cristallin dans un matériau à changement de phase ou bien par des effets magnétiques ou optiques.

L'enregistrement de données est aussi réalisé par le déplacement d'espèces chargées électriquement (électrons, ions) ou d'un courant depuis une micro-pointe au travers du support d'enregistrement. Une telle technique permet également d'obtenir des bits présentant une très bonne résolution spatiale.

S. Gidon et al., dans l'article « Electrical probe storage using Joule heating in phase change media » (Applied Physics Letters, Vol. 85, N°26, 27/12/2004, pages 6392-6394) ont étudié l'enregistrement de données réalisé à l'aide de micro-pointes dans un support d'enregistrement par changement de phase. Le support d'enregistrement est formé d'un empilement comportant successivement un substrat en silicium, une électrode en carbone, une couche d'enregistrement en Ge₂Sb₂Te₅ et une couche de protection en carbone. L'enregistrement est réalisé en chauffant par effet Joule, une zone de la couche d'enregistrement. Ladite zone est en effet désignée par une micro-pointe polarisée électriquement de manière à ce qu'un courant passe à travers le support, ce qui permet d'obtenir une marque d'une dimension de 15 nm.

Cependant, la performance de tels supports d'enregistrement provient du fait que la couche d'enregistrement est désignée, en champ proche, par des micro-pointes. Ainsi, la ou les couches de protection disposées entre les micro-pointes et la couche d'enregistrement, notamment pour protéger le support contre la friction des micro-pointes, doivent être aussi fines que possibles pour ne pas réduire la résolution spatiale. Or, cette contrainte n'est pas compatible avec une durée de vie élevée des supports d'enregistrement, d'autant que les couches de protection sont souvent soumises à des sollicitations importantes telles que l'échauffement provoqué par le passage du courant ou les effets liés au champ électrique de surface.

Dans la demande de brevet EP-A-0739004, le support d'enregistrement ne comporte pas de couche de protection. L'enregistrement de données est réalisé en modifiant localement la conduction du support d'enregistrement, sous champ électrique. Cette modification intervient par claquage d'une couche isolante en oxyde de silicium, formée sur un substrat en silicium dopé p ou n et utilisée comme couche d'enregistrement. En effet, l'application d'une tension entre une micro-pointe placée du côté de la couche isolante et ledit substrat crée un flux de courant de type Fowler-Nordheim qui provoque une diminution locale de la résistance de la couche isolante. Cette diminution locale de la résistance de la couche isolante est, ainsi, utilisée pour enregistrer des données dans la couche isolante. Cependant, l'absence de couche de protection rend ce type de support d'enregistrement extrêmement fragile.

Dans le document US2005/0285169, la couche mémoire en matériau hystérétique d'une matrice mémoire est recouverte par une couche conductrice qui est électriquement anisotrope. La couche conductrice est formée par un procédé permettant d'obtenir une structure moléculaire qui comporte des îlots conducteurs traversants, isolés les uns des autres par une matrice de plus faible conductivité. Les structures moléculaires utilisées sont, par exemple, des clusters métalliques, des grains en forme de colonnes, des films granuleux, des fullerènes, des nanoparticules... La couche conductrice, avec ses îlots conducteurs, permet, dans le document US2005/0285169, de remplacer les structures masquées multicouches destinées à délimiter les cellules ferroélectriques des mémoires vives ferroélectriques (FeRAM).

Dans la demande de brevet GB1088117, un support d'enregistrement mobile de données par effet électrique comporte un substrat conducteur électriquement, sur lequel est déposé un film en bisulfure de molybdène, apte à passer, sélectivement et de manière réversible, d'un état de haute impédance à un état de faible impédance sous l'action d'un courant électrique contrôlé, appliqué entre une pointe et le substrat conducteur. Le film en bisulfure de molybdène peut être recouvert par un autre film, structuré sous forme d'une pluralité de plots conducteurs, l'espace entre les plots conducteurs étant rempli par un matériau isolant. Ainsi, l'enregistrement et l'effacement de données sont réalisés dans les zones du film en bisulfure de molybdène, disposées directement sous les plots conducteurs. Un tel film n'est, cependant, pas facile à mettre en oeuvre et ne permet pas un enregistrement précis de données.

### Objet de l'invention

L'invention a pour but de remédier aux inconvénients de l'art antérieur. Plus particulièrement, l'invention a pour but de proposer un support d'enregistrement de données par effet électrique présentant de fortes capacités de stockage des données.

Selon l'invention, ce but est atteint par les revendications annexées.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
Les figures 1 et 2 représentent, en coupe et schématiquement, un premier mode de réalisation d'un support d'enregistrement selon l'invention, respectivement avant et après l'enregistrement de données.
La figure 3 représente, en coupe et schématiquement, un second mode de réalisation d'un support d'enregistrement selon l'invention.
La figure 4 représente, en coupe et schématiquement, une variante de réalisation d'un support d'enregistrement selon la figure 3.
La figure 5 représente en coupe un troisième mode de réalisation d'un support d'enregistrement selon l'invention.

### Description de modes particuliers de réalisation

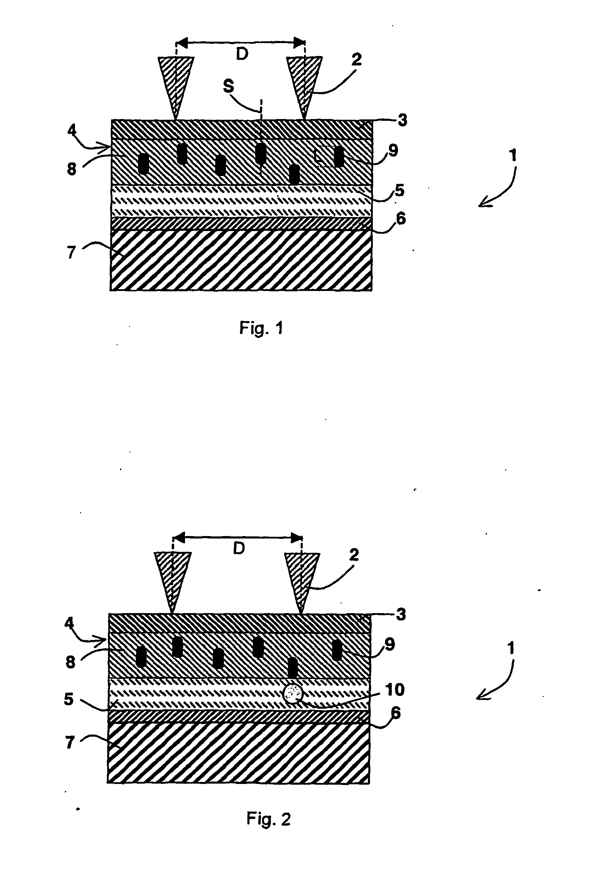

Selon un premier mode de réalisation illustré sur les figures 1 et 2, un support d'enregistrement de données par effet électrique 1, utilisé par exemple dans un dispositif d'enregistrement par micro-pointes 2, est constitué d'un empilement successif de couches minces, de préférence planes.

Par support d'enregistrement de données par effet électrique 1, on entend un support d'enregistrement apte à exploiter des effets de stockage de charges, de migration d'espèces chargées (ions, cations) ou des effets de conduction sous champ. Ceci peut provoquer une modification localisée de la conductivité électrique locale, dans la couche d'enregistrement ou couche mémoire du support, par exemple par claquage ou par passage d'un courant. L'effet électrique peut également être considéré comme un effet de champ, induisant une concentration des lignes de courant dans une couche d'enregistrement plus ou moins conductrice. Dans ce cas, le processus d'écriture peut reposer sur un effet thermique dans une couche d'enregistrement à changement de phase ou sur un effet électrolytique ou sur tout autre effet conduisant à des déplacements d'espèces chargées.

Dans un dispositif d'enregistrement par micro-pointes 2, une tension est appliquée entre au moins une micro-pointe 2 et une électrode disposée sous la couche d'enregistrement, de manière à, généralement, modifier localement la conduction électrique de la couche d'enregistrement.

Ainsi, sur les figures 1 et 2, le support 1 est constitué par une superposition successive d'une couche de protection 3, d'une couche à conduction électrique localisée 4, d'une couche d'enregistrement 5 ou couche mémoire, d'une couche mince formant une électrode 6 et d'un substrat 7. Deux micro-pointes 2, espacées d'une distance D, typiquement de 100µm, sont disposées du côté de la couche de protection 3 du support 1, leur extrémité libre touchant ladite couche de protection 3.

La couche à conduction électrique localisée 4, disposée sur la couche d'enregistrement 5, est une couche mince comportant des zones localisées ayant une conduction électrique supérieure à celle du reste de ladite couche mince 4. Plus particulièrement, la couche mince 4 est formée par un matériau 8 de faible conductivité électrique, dans lequel sont dispersées des inclusions 9 dont la conductivité électrique est supérieure à celle du matériau 8. Les inclusions 9 définissent, ainsi, les zones de conductivité électrique supérieure. Sur les figures 1 et 2, les inclusions 9 sont de forme oblongue et elles présentent un axe longitudinal S sensiblement perpendiculaire à l'interface entre la couche à conduction électrique localisée 3 et la couche d'enregistrement 5. Les inclusions 9 sont, par exemple, formées par des nanotubes en carbone ou des nanotubes en silicium dopé n ou p, le dopage rendant le silicium conducteur. Le matériau 8 de la couche à conduction électrique localisée 4 est, par ailleurs, choisi pour présenter une conductivité électrique non linéaire, c'est-à-dire une conduction électrique variable en fonction du champ électrique auquel le matériau 8 est soumis. Le matériau 8 est, par exemple, un composé à base de chalcogénure, présentant une conductivité électrique augmentant avec le champ électrique appliqué, tel que GeSbTe, AglnSbTe. Le matériau 8 peut également être un tellurure, un séléniure, un sulfure tel que FeSi₂ ou du silicium amorphe hydrogéné.

La présence d'une couche à conduction électrique localisée 4 sur la couche d'enregistrement 5 et, plus particulièrement, entre la couche d'enregistrement 5 et les micro-pointes 2 permet de protéger mécaniquement la couche d'enregistrement, notamment contre la friction provoquée par les micro-pointes 2 mais aussi de toutes contraintes mécaniques de compression résultant du contact des micro-pointes sur le dispositif d'enregistrement.

De plus, le fait de disposer, sur la couche d'enregistrement 5, une couche à conduction électrique localisée 4 permet de focaliser l'effet de champ-électrique, ce qui permet non seulement d'obtenir de fortes capacités de stockage tout en conservant une bonne résolution spatiale mais également de réduire l'énergie nécessaire à l'enregistrement desdites données en localisant très finement l'effet électrique. En effet, la présence de zones localisées à conductivité électrique élevée, telles que les inclusions 9, permet d'exploiter, dans le support 1, un effet électrique amplifié par le facteur de forme du volume de ladite zone et plus particulièrement du volume de l'inclusion 9. Une inclusion 9 de forme oblongue, conduit, ainsi, lorsqu'une micro-pointe 2 est disposée à proximité de ladite inclusion 9, à la prolongation de l'effet de pointe dans la couche à conduction électrique localisée 4, avant d'atteindre la couche d'enregistrement 5 dans laquelle vont se former des marques. La prolongation de l'effet de pointe dans la couche à conduction électrique localisée 4 peut se produire par influence électrique ou par conduction par proximité d'îlots, la conduction par proximité d'îlots étant équivalente à une conduction de type conduction par sauts dans un milieu peu conducteur. Ainsi, sur la figure 2, une marque (bits) 10 a été enregistrée dans la couche d'enregistrement 5, respectivement en regard des inclusions 9 les plus proches de la micro-pointe portant la référence 2.

Plus particulièrement, une modélisation numérique du champ électrique au voisinage d'une inclusion 9 telle que celle représentée sur la figure 1, sous l'influence d'une micro-pointe 2 polarisée, permet de déterminer :
- un rapport optimal de l'ordre de 3 entre l'épaisseur de la couche à conduction électrique localisée 4 et celle de la couche d'enregistrement 5
- et un rapport optimal de l'ordre de 1/3 entre la résistivité électrique de la couche à conduction électrique localisée 4 et celle de la couche d'enregistrement 5.
Les épaisseurs des couches 4 et 5 sont de l'ordre de quelques nanomètres à quelques dizaines de nanomètres. A titre d'exemple, l'épaisseur de la couche à conduction électrique localisée 4 peut atteindre 50nm.

De plus, le fait que le matériau 8 présente une conductivité électrique non linéaire présente l'avantage d'obtenir un effet caisson lorsqu'un champ électrique est appliqué entre une micro-pointe 2 et une électrode 6. En effet, un matériau à conduction électrique non linéaire permet de diriger le champ électrique sur l'inclusion 9 la plus proche de ladite micro-pointe 2. Ceci permet la création d'une marque unique dans la couche d'enregistrement 5, ladite marque étant disposée sensiblement sous l'inclusion 9 correspondante. Au contraire, avec à un matériau à conduction électrique linéaire, l'application d'un champ électrique à proximité de plusieurs inclusions conduit à la formation de plusieurs marques dans la couche d'enregistrement. Cette caractéristique du matériau 8, combinée avec la forme oblongue des inclusions, est particulièrement avantageuse, dans la mesure où le support d'enregistrement profite d'un double effet de focalisation des lignes de champ, apporté à la fois par la forme oblongue des inclusions et par la propriété de conduction non linéaire du matériau 8.

Avantageusement et comme représenté sur les figures 1 et 2, les inclusions 9 sont non traversantes, c'est-à-dire qu'elles ne traversent pas la couche à conduction localisée 4 dans le sens de son épaisseur. Plus particulièrement, sur les figures 1 et 2, la dimension maximale L des inclusions oblongues 9 est inférieure à l'épaisseur de la couche à conduction localisée 4, de sorte qu'aucune inclusion n'est à la fois en contact avec l'interface entre la couche à conduction localisée 4 et la couche de protection 3 et en contact avec l'interface entre la couche à conduction localisée 4 et la couche d'enregistrement 5. Ceci facilite, notamment, la formation de la couche à conduction localisée 4, dans la mesure où le matériau 8 peut être déposé de manière continue, en encapsulant, par exemple, les inclusions 9.

À titre d'exemple, un support d'enregistrement 1 tel que celui représenté sur la figure 1 est obtenu en réalisant successivement sur le substrat 7 :
a) le dépôt de la couche mince formant l'électrode 6, par exemple par dépôt physique en phase vapeur (PVD) de carbone amorphe éventuellement chargé en ajoutant soit dans la cible, soit en co-pulvérisation des inclusions métalliques (par exemple en or ou en argent) destinées à augmenter la conductivité électrique de la couche mince,
b) le dépôt de la couche d'enregistrement 5, par exemple par dépôt PVD ou par dépôt chimique en phase vapeur (CVD) ou par évaporation sous vide. La couche d'enregistrement 5 est, par exemple, constituée par un matériau quasi-isolant, apte à claquer par effet de champ électrique, un tel matériau étant par exemple de la silice ou de l'alumine avec une épaisseur de couche mince inférieure à 2nm. La couche d'enregistrement 5 peut également être constituée par un matériau à faible conductivité électrique dont la valeur est modifiée par le passage d'un courant localisé, tel que du carbone chargé d'impuretés aptes à coalescer lors d'un effet électrique et donc de modifier localement la conductivité électrique de la couche,
c) la croissance de nanotubes formant les inclusions 9, par exemple des nanotubes de carbone, en utilisant par exemple le procédé décrit par M. Chhowalla et al. dans l'article « Growth process conditions of vertically aligned carbon nanotubes using plasma enhanced chemical vapor deposition » (Journal of Applied Physics, Vol. 90, N°10, 15/11/2001, pages 5308-5316),
d) le dépôt d'un matériau 8 à conductivité électrique non linéaire, de manière à former la couche à conduction électrique localisée 4 en recouvrant les nanotubes de carbone.
e) la planarisation de la couche à conduction électrique localisée 4, par exemple par polissage mécano-chimique (CMP), de manière à contrôler l'épaisseur de la couche 4 et, plus particulièrement, la hauteur des inclusions 9,
f) le dépôt de la couche de protection 3, par exemple réalisé par dépôt PVD de carbone, éventuellement chargé par des inclusions métalliques permettant d'obtenir une bonne conductivité électrique.

Un tel procédé de réalisation du support d'enregistrement 1 permet de contrôler précisément l'épaisseur de la couche d'enregistrement 5. Ceci est particulièrement important dans la mesure où celle-ci doit être très faible pour permettre de développer un champ électrique élevé. L'épaisseur de la couche d'enregistrement 5 est plus particulièrement contrôlée car cette couche est réalisée dans les premières étapes du procédé et son dépôt ne soufre pas d'éventuelles dispersions de forme du support.

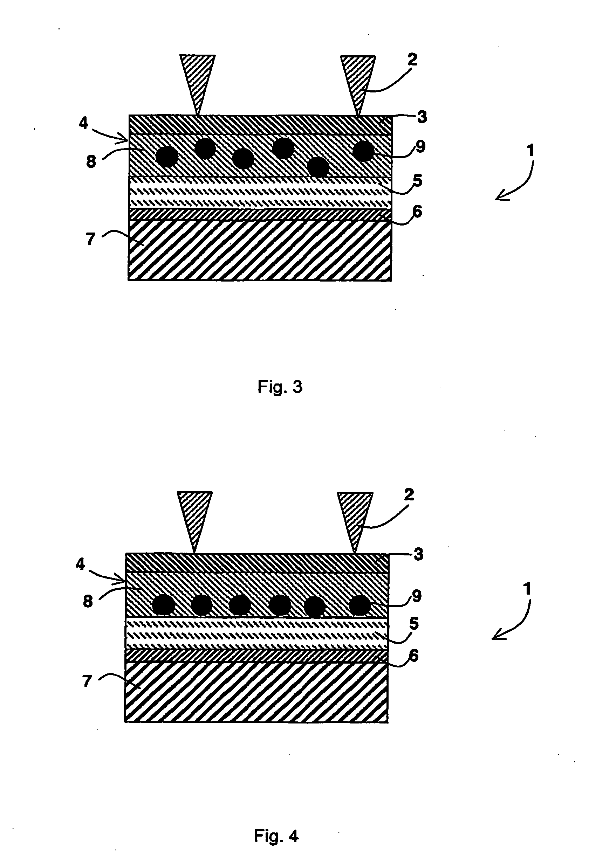

Selon un second mode de réalisation, représenté sur la figure 3, les inclusions 9 de la couche à conduction électrique localisée 4 sont de forme sensiblement sphérique. Plus particulièrement, les inclusions 9 peuvent être en métal, par exemple choisi parmi le nickel et le fer ou bien elles peuvent être en un composé choisi, par exemple, parmi les composés à base de nickel, de fer, d'or ou d'argent, le composé gallium-arsenic et le composé aluminium-arsenic. Ainsi, les inclusions sphériques localisent, vers la couche d'enregistrement 5, l'action du champ électrique appliqué depuis une micro-pointe, par influence.

Dans la variante de réalisation représentée sur la figure 4, les inclusions 9 de forme sphérique peuvent être en contact avec l'interface entre la couche d'enregistrement 5 et la couche à conduction électrique localisée 4.

À titre d'exemple, les inclusions de forme sphérique peuvent être des gouttes obtenues par démouillage à basse température d'une couche métallique, par exemple en nickel ou en fer, d'une épaisseur inférieure à 10nm et déposée préalablement sur la couche d'enregistrement 5. Les inclusions de forme sphérique 9 peuvent également être obtenues par gravure d'une couche métallique, à travers un masque. Ce masque peut être un masque photolithographique ou bien il peut être obtenu par un procédé d'auto-organisation tel que celui décrit par K.W. Guarini et al. dans l'article « Process intégration of self-assembied polymer templates into silicon nanofabrication » (J. Vac. Sci. Technol. B 20(6), Nov/Dec 2002, p2788-2792). La gravure présente l'avantage d'être réalisée à température ambiante, ce qui autorise l'emploi de matériau à changement de phase pour la couche d'enregistrement 5.

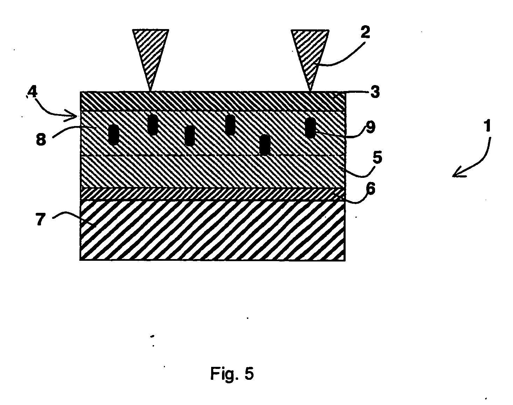

De même, le matériau formant la couche d'enregistrement 5 peut être identique au matériau 8 de la couche à conduction électrique localisée 4, comme représenté sur la figure 5. Ceci peut, par exemple, être particulièrement intéressant avec un matériau commun à base de chalcogénure.

L'invention n'est pas limitée aux modes de réalisation décrits ci-dessus. A titre d'exemple, le support d'enregistrement de données par effet électrique peut être un support de type mémoire solide, mémoire électrique, à changement de phase (« Phase Change ram » ou PCram ou mémoire vive à changement de phase), de type CBram (« Conductive Bridge ram » ou mémoire vive avec passerelle conductrice) ou de type solid WORM (support ou média non réinscriptible).

## Revendications

1. Support d'enregistrement de données par effet électrique (1) comportant au moins une couche d'enregistrement (5) sur laquelle est disposée une couche à conduction électrique localisée (4), constituée par un matériau (8) présentant une faible conductivité électrique et dans lequel sont dispersées des inclusions (9) présentant une conductivité électrique supérieure à celle dudit matériau (8), **caractérisé en ce que** le matériau (8) présente une conductivité électrique non linéaire.

2. Support selon la revendication 1, **caractérisé en ce que** les inclusions (9) sont non traversantes.

3. Support selon l'une des revendications 1 et 2, **caractérisé en ce que** les inclusions (9) sont de forme oblongue.

4. Support selon la revendication 3, **caractérisé en ce que** chaque inclusion (9) présente un axe longitudinal (S) sensiblement perpendiculaire à l'interface entre la couche à conduction électrique localisée (4) et la couche d'enregistrement (5).

5. Support selon l'une des revendications 3 et 4, **caractérisé en ce que** les inclusions (9) sont des nanotubes en carbone ou des nanotubes en silicium dopé n ou p.

6. Support selon l'une des revendications 1 et 2, **caractérisé en ce que** les inclusions (9) sont de forme sensiblement sphérique.

7. Support selon la revendication 6, **caractérisé en ce que** les inclusions (9) sont constituées par un métal choisi parmi le nickel et le fer ou par un composé choisi parmi le composé gallium-arsenic, le composé aluminium-arsenic et parmi les composés à base de nickel, de fer, d'or ou d'argent.

8. Support selon l'une quelconque des revendications 1 à 7, **caractérisé en ce que** le matériau (8) de la couche à conduction électrique localisée (4) est un chalcogénure.

9. Support selon l'une quelconque des revendications 1 à 8 **caractérisé en ce que** le matériau formant la couche d'enregistrement (5) est identique au matériau (8) de la couche à conduction électrique localisée (4).

10. Support selon l'une quelconque des revendications 1 à 9, **caractérisé en ce que** les inclusions (9) sont en contact avec l'interface entré la couche d'enregistrement (5) et la couche à conduction électrique localisée (4).

11. Utilisation d'un support (1) selon l'une quelconque des revendications 1 à 10, dans un dispositif d'enregistrement de données comportant au moins une micro-pointe (2), **caractérisé en ce que** la couche à conduction électrique localisée (4) est disposée entre la couche d'enregistrement (5) et la micro-pointe (2).

## Claims

1. Electrical-effect data recording medium (1) comprising at least a recording layer (5) whereon there is arranged a localized electrical conduction layer (4) formed by a material (8) presenting a low electrical conductivity and wherein inclusions (9) presenting a higher electrical conductivity than that of said material (8) are dispersed, **characterized in that** the material (8) presents a non-linear electrical conductivity.

2. Medium according to claim 1, **characterized in that** the inclusions (9) are non pass-through.

3. Medium according to one of claims 1 and 2, **characterized in that** the inclusions (9) have an oblong shape.

4. Medium according to claim 3, **characterized in that** each inclusion (9) presents a longitudinal axis (S) substantially perpendicular to the interface between the localized electrical conduction layer (4) and the recording layer (5).

5. Medium according to one of claims 3 and 4, **characterized in that** the inclusions (9) are carbon nanotubes or n- or p-doped silicon nanotubes.

6. Medium according to one of claims 1 and 2, **characterized in that** the inclusions (9) have a substantially spherical shape.

7. Medium according to claim 6, **characterized in that** the inclusions (9) are made from a metal chosen from nickel and iron or by a compound chosen from the gallium-arsenic compound, the aluminum-arsenic compound and from nickel-, iron-, gold- or silver-base compounds.

8. Medium according to any one of claims 1 to 7, **characterized in that** the material (8) of the localized electrical conduction layer (4) is a chalcogenide.

9. Medium according to any one of claims 1 to 8, **characterized in that** the material forming the recording layer (5) is identical to the material (8) of the localized electrical conduction layer (4).

10. Medium according to any one of claims 1 to 9, **characterized in that** the inclusions (9) are in contact with the interface between the recording layer (5) and the localized electrical conduction layer (4).

11. Use of a medium (1) according to any one of claims 1 to 10, in a data recording device comprising at least one microtip (2), **characterized in that** the localized electrical conduction layer (4) is arranged between the recording layer (5) and the microtip (2).

## Patentansprüche

1. Datenaufzeichnungsmedium zum Aufzeichnen von Daten durch elektrische Wirkung (1), das mindestens eine Aufzeichnungsschicht (5) umfasst, auf der eine lokal elektrisch leitende Schicht (4) aufgebracht ist, die aus einem Material (8) mit geringer elektrischer Leitfähigkeit besteht und in der Einschlüsse (9) verteilt sind, die eine höhere elektrische Leitfähigkeit haben als das genannte Material (8), **dadurch gekennzeichnet, dass** das Material (8) eine nichtlineare elektrische Leitfähigkeit hat.

2. Medium nach Anspruch 1, **dadurch gekennzeichnet, dass** die Einschlüsse (9) nicht durchgehend sind.

3. Medium nach einem der Ansprüche 1 und 2, **dadurch gekennzeichnet, dass** die Einschlüsse (9) eine längliche Form haben.

4. Medium nach Anspruch 3, **dadurch gekennzeichnet, dass** jeder Einschluss (9) eine Längsachse (S) hat, die im Wesentlichen quer zur Grenzfläche zwischen der lokal elektrisch leitenden Schicht (4) und der Aufzeichnungsschicht (5) verläuft.

5. Medium nach einem der Ansprüche 3 und 4, **dadurch gekennzeichnet, dass** die Einschlüsse (9) Kohlenstoffnanoröhren oder Nanoröhren aus n- oder p-dotiertem Silizium sind.

6. Medium nach einem der Ansprüche 1 und 2, **dadurch gekennzeichnet, dass** die Einschlüsse (9) im Wesentlichen kungelförmig sind.

7. Medium nach Anspruch 6, **dadurch gekennzeichnet, dass** die Einschlüsse (9) von einem Metall gebildet werden, das aus Nickel oder Eisen oder einer Gallium-Arsen- oder Aluminium-Arsen-Verbindung und aus den Verbindungen auf Nickel-, Eisen-, Gold- oder Silberbasis ausgewählt ist.

8. Medium nach einem der Ansprüche 1 bis 7, **dadurch gekennzeichnet, dass** das Material (8) der lokal elektrisch leitenden Schicht (4) ein Chalcogenid ist.

9. Medium nach einem der Ansprüche 1 bis 8, **dadurch gekennzeichnet, dass** das Material, das die Aufzeichnungsschicht (5) bildet, identisch ist mit dem Material (8) der lokal elektrische leitenden Schicht (4).

10. Medium nach einem der Ansprüche 1 bis 9, **dadurch gekennzeichnet, dass** die Einschlüsse (9) Kontakt mit der Grenzfläche zwischen der Aufzeichnungsschicht (5) und der lokal elektrische leitenden Schicht (4) haben.

11. Verwendung eines Mediums (1) nach einem der Ansprüche 1 bis 10 in einer Datenaufzeichnungsvorrichtung, die mindestens eine Mikrospitze (2) umfasst, **dadurch gekennzeichnet, dass** die lokal elektrische leitende Schicht (4) zwischen der Aufzeichnungsschicht (5) und der Mikrospitze (2) vorgesehen ist.
